# EUROPEAN PATENT APPLICATION

(11) **EP 4 664 287 A1**
(43) Date of publication of application: **17.12.2025**
(21) Application number: 25179712.2
(22) Date of filing: 29.05.2025
(51) Int. Cl.: G06F 9/50, H04L 67/1008, H04L 67/2885

(54) **COMPUTER WORKLOAD ALLOCATION FOR HARDWARE PROCESSING SYSTEM**

(30) Priority: 14.06.2024 US 202418744439
(71) Applicant: Microsoft Technology Licensing, LLC, Redmond, WA 98052 (US)
(72) Inventor: XU, XIAOLING, Redmond, 98052 (US); RANJAN, PRASHANT, Redmond, 98052 (US)
(74) Representative: CMS Cameron McKenna Nabarro Olswang LLP

(57) **Abstract**

A method (200) for computer workload allocation at a system-on-chip (SoC) (100) includes, at a load balancing controller (102) of the SoC (100), dividing a computer workload (104) for distributed processing between each of a plurality of hardware accelerators (106) of the SoC (100) as a plurality of accelerator-specific data allocations (108). At a hardware accelerator of the plurality of hardware accelerators (106), after receiving an accelerator-specific data allocation (108) from the load balancing controller (102), a resulting dataset output by the hardware accelerator (106) is divided between a plurality of network interface controllers (NICs) (110) of the SoC (100) as a plurality of NIC-specific data allocations (112). At an NIC of the plurality of NICs (110) an NIC-specific data allocation (112) assigned to the NIC (110) is divided between a plurality of network ports (114) of the NIC (110) for transmission over a computer network (118).

## Description

### BACKGROUND

Hardware processing systems, such as system-on-Chip (SoC) architectures, sometimes integrate multiple hardware processing components to handle different aspects of a computational workload in parallel. These may include various types of hardware accelerators, such as computer processors.

### SUMMARY

A method for computer workload allocation at a hardware processing system includes, at a load balancing controller of the hardware processing system, dividing a computer workload for distributed processing between each of a plurality of hardware accelerators of the hardware processing system as a plurality of accelerator-specific data allocations. At a hardware accelerator of the plurality of hardware accelerators, after receiving an accelerator-specific data allocation from the load balancing controller, a resulting dataset output by the hardware accelerator is divided between a plurality of network interface controllers (NICs) of the hardware processing system as a plurality of NIC-specific data allocations. At an NIC of the plurality of NICs an NIC-specific data allocation assigned to the NIC is divided between a plurality of network ports of the NIC for transmission over a computer network.

This Summary is provided to introduce a selection of concepts in a simplified form that are further described below in the Detailed Description. This Summary is not intended to identify key features or essential features of the claimed subject matter, nor is it intended to be used to limit the scope of the claimed subject matter. Furthermore, the claimed subject matter is not limited to implementations that solve any or all disadvantages noted in any part of this disclosure.

### BRIEF DESCRIPTION OF THE DRAWINGS

FIG. 1 schematically shows aspects of an example hardware processing system configured to perform computer workload allocation techniques.
FIG. 2 illustrates an example method for computer workload allocation at a hardware processing system.
FIG. 3 represents sizes of different accelerator-specific data allocations.
FIG. 4 represents processing completion times of different hardware accelerators of a hardware processing system.
FIG. 5 schematically shows an example computing system.

### DETAILED DESCRIPTION

The present disclosure relates to techniques for computer workload allocation between different components of a hardware processing system. As used herein, a "hardware processing system" may refer to any suitable system of two or more hardware accelerators disposed in or on the same physical structure, such as a printed circuit board (PCB). As examples, a hardware processing system may take the form of a system-on-chip (SoC), multi-chip module (MCM), field-programmable gate array (FPGA), graphics processing unit (GPU), or any other suitable form. Similarly, "hardware accelerators" may take any suitable form, such as computer processors, arithmetic logic units, processing engines, tensor cores, etc.

In one non-limiting example, the hardware processing system is a component of a distributed computing platform, in which computer workloads are distributed between a plurality of different hardware processing systems working cooperatively. Each hardware processing system includes two or more hardware accelerators, such as computer processors, configured to process data associated with the computer workload. The hardware processing systems are sometimes referred to herein as "endpoints" or "endpoint devices" within a distributed computing platform, wherein the different endpoints communicate with one another over a computer network. As one non-limiting example, the distributed computing platform may be an artificial intelligence (AI) or machine learning (ML) inferencing platform, in which inferencing workloads are fulfilled by the hardware accelerators distributed between the various endpoint devices of the platform.

When a plurality of hardware processing systems communicate over a computer network (e.g., as part of a distributed computing platform), it can be difficult to balance input/output (IO) data traffic generated by the hardware processing systems. For instance, it can be difficult to balance IO traffic across available network paths between endpoints in the network. Furthermore, load balancing impacts not only network efficiency, but also network reliability - e.g., it can be difficult to rebalance IO traffic across available paths if one or more network paths suddenly fail or otherwise go offline. This problem is exacerbated when different hardware processing systems of the larger platform generate data unpredictably - e.g., when different endpoints transmit different amounts of data at different times.

This problem can be at least partially mitigated through load balancing performed at each endpoint device in the distributed computing platform. Load balancing may be used to control the amount of data transmitted over different network ports of the hardware processing system, as well as the timing of such data transmission. Some approaches to load balancing in endpoint devices apply a flat implementation across all available network ports of the device, which is resource intensive. In an example scenario, software may be used to manage a large number of different network ports (e.g., 128 network ports) of an endpoint device, while also relying on hardware components to arbitrate load balancing across the network ports. This can significantly reduce the bandwidth capabilities of the hardware processing system. For instance, the need to handle each port individually and equally within a flat load balancing scheme means that the hardware and software must continuously monitor and adjust the load across all ports. This continuous monitoring and adjustment can consume significant processing power and memory, resulting in increased latency and reduced overall efficiency. Furthermore, the hardware components responsible for arbitrating load balancing must be capable of managing the full set of ports, which can lead to bottlenecks and limit the maximum achievable bandwidth of the hardware processing system.

Accordingly, the present disclosure is directed to techniques for computer workload allocation between different components of a hardware processing system, in which the workload is divided multiple times at different hierarchical layers. As described herein, a hardware processing system includes a load balancing controller, a plurality of hardware accelerators, and a plurality of network interface controllers (NICs). Each NIC manages two or more network ports, over which the hardware processing system communicates with other devices over a computer network.

The load balancing controller is configured to receive a computer workload, and then allocate different portions of this workload to different hardware accelerators for processing. Each hardware accelerator, upon receiving its allocated portion of the workload, processes the data accordingly and generates output data. Subsequently, the hardware accelerators divide their output data among the NICs. Each NIC is responsible for further distributing its received data among its associated ports. In this manner, data associated with the original computer workload is divided multiple times at different hierarchical layers - e.g., first between the different hardware accelerators, then between the different NICs, and then between the different network ports managed by each NIC.

This hierarchical distribution method has the technical effect of ensuring that the workload is evenly balanced across the components of the hardware processing system, which provides the technical benefit of improving the overall system performance. For instance, the techniques described herein beneficially improve the bandwidth capabilities of the hardware processing system, enabling it to transmit more processed data in the same amount of time. The hierarchical division is managed by the load balancing controller, which monitors the status and performance of each hardware accelerator and NIC. By doing so, it ensures that the system maintains high efficiency and responsiveness under varying operational conditions. Each component in the hierarchical structure operates cooperatively to handle the computational and data transmission tasks efficiently. The integration of hardware accelerators and NICs within the hardware processing system allows for streamlined communication and processing, reducing bottlenecks and enhancing data throughput across the system. This may beneficially enable data generation and transmission between different endpoint devices in a computer network in a manner that is controlled and predictable, which improves the efficiency with which IO traffic may be transmitted between devices in the network.

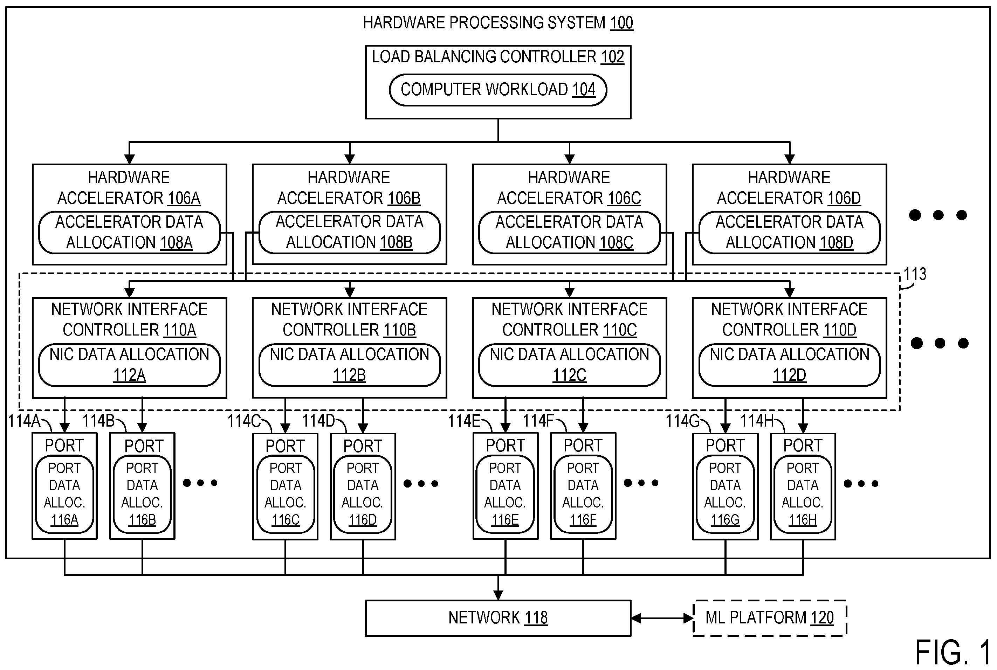

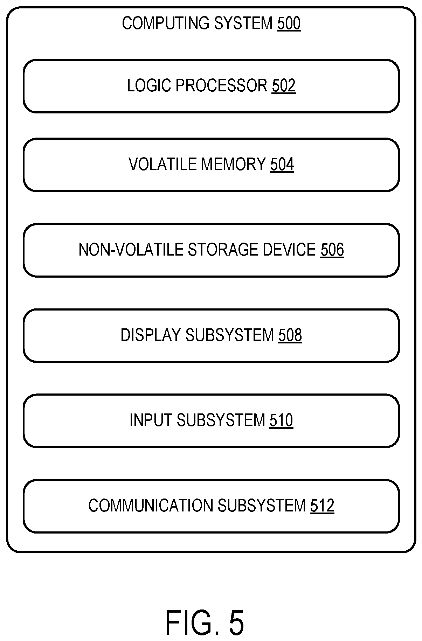

FIG. 1 schematically shows an example hardware processing system 100, which is used to illustrate the workload allocation techniques described herein. As discussed above, a hardware processing system may refer to any suitable system of two or more hardware accelerators (e.g., computer processors) disposed in or on the same physical structure (e.g., PCB). In some examples, the hardware processing system is a component of a larger computing platform, such as a distributed AI or ML inferencing platform. For instance, in one example scenario, the hardware processing system is a SoC, which is a component of a distributed ML inferencing platform having a plurality of SoCs working in parallel to fulfill inferencing workloads. However, it will be understood that the workload allocation techniques described herein may be applied to any suitable hardware processing system, used in any suitable computing context. In some examples, hardware processing system 100 may be implemented as computing system 500 described below with respect to FIG. 5.

As shown, the hardware processing system includes a load balancing controller 102. This takes the form of any suitable computer processor, or other computer logic component, useable to receive and distribute sets of computer data between different hardware accelerators. In some examples, the load balancing controller may be implemented as logic subsystem 502 described below with respect to FIG. 5.

In FIG. 1, the load balancing controller has received a computer workload 104 for processing by hardware accelerators of the hardware processing system. The computer workload may take any suitable form depending on the implementation. It will be understood that the techniques described herein may be applied to a wide range of different data processing scenarios, and thus a "computer workload" as described herein may include any arbitrary collection of computer data for processing by hardware accelerators. Furthermore, the computer workload may be received from any suitable source. For instance, the computer workload may be received via a network interface of the hardware processing system, and/or aspects of the computer workload may be generated by the hardware processing system.

As one non-limiting example, the computer workload may take the form of an inferencing workload associated with processing an input prompt in an ML or AI inferencing system. In such a scenario, the input prompt may be a query or data input that causes the AI system to generate a response or prediction based on pre-trained models. The workload may include various computational tasks, such as data preprocessing, model execution, and post-processing of results, each of which can be distributed among various hardware accelerators to enhance processing efficiency and speed.

Additionally, or alternatively, the computer workload may include other forms of data processing tasks, such as training machine learning models, where large datasets are processed to update model parameters. The computer workload may include scientific simulations, where complex mathematical models are computed to simulate physical phenomena, or cryptographic operations, where data encryption and decryption tasks are performed to ensure data security. The computer workload may include real-time data processing tasks in financial systems, such as algorithmic trading. The computer workload may include multimedia processing, such as video encoding and/or decoding, where large volumes of video data are processed to compress or render high-quality video streams. Overall, the term "computer workload" encompasses a diverse array of computational tasks that can benefit from the load balancing techniques described herein, ensuring that these tasks are executed efficiently and effectively.

The computer workload may include a plurality of values for processing via matrix calculations performed by hardware accelerators of the hardware processing system. Additionally, or alternatively, the data of the computer workload may be processed in any other suitable way - e.g., through any suitable data manipulation operations that can be performed by computer hardware accelerators. These may include, for instance, matrix multiplications, transforms, convolutional operations, cryptographic operations, signal processing operations, etc. It will be understood that the present disclosure primarily focuses on distributing aspects of a computer workload between different components of a hardware processing system, and is agnostic as to the specific types of processing applied by the hardware accelerators in fulfilling the computer workload.

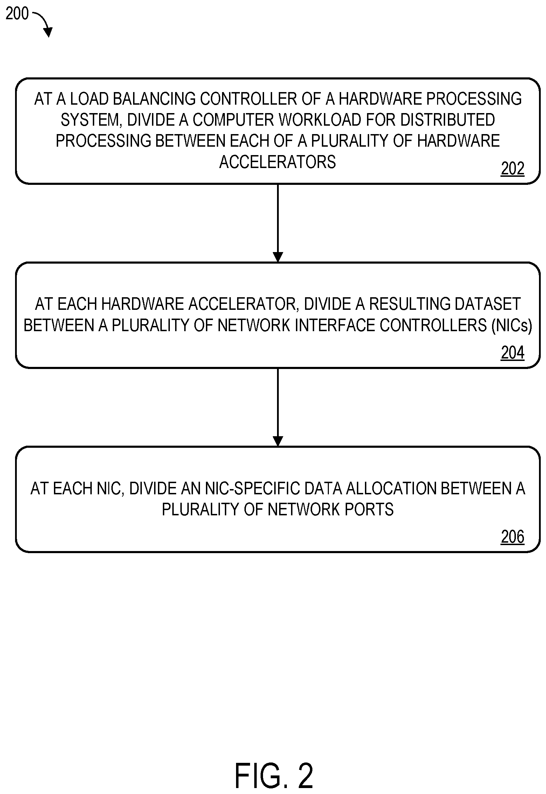

To this end, FIG. 2 illustrates an example method 200 for computer workload allocation at a hardware processing system. Steps of method 200 may be initiated, terminated, and/or repeated at any suitable time and in response to any suitable condition. Method 200 is primarily described with respect to hardware processing system 100 of FIG. 1. However, it will be understood that steps of method 200 may be performed by any suitable computing system of one or more computing devices, each of which may have any suitable number of subcomponents. As one non-limiting example, method 200 may be implemented as computing system 500 described below with respect to FIG. 5.

At 202, method 200 includes, at a load balancing controller of the hardware processing system, dividing a computer workload for distributed processing between each of a plurality of hardware accelerators of the hardware processing system as a plurality of accelerator-specific data allocations. In other words, the computer workload takes the form of a set of data for processing by the hardware accelerators. Data of the computer workload is divided into different accelerator-specific data allocations, which are provided to each of the hardware accelerators for processing.

This is shown in FIG. 1, in which the hardware processing system includes four hardware accelerators 106A, 106B, 106C, and 106D. The computer workload 104 is divided into different accelerator-specific data allocations 108A, 108B, 108C, and 108D, which are provided to the different hardware accelerators 106 for processing. In some cases, each hardware accelerator may transmit feedback to the load balancing controller - e.g., to acknowledge receipt of an accelerator-specific data allocation, and/or to confirm successful processing of an accelerator-specific data allocation.

In this example, the load balancing controller divides the computer workload between four hardware accelerators. However, it will be understood that this is non-limiting. Rather, a hardware processing system as described herein generally includes two or more hardware accelerators, and may include any suitable number, including more than four hardware accelerators.

In some examples, each of the plurality of accelerator-specific data allocations are processed concurrently by the plurality of hardware accelerators. This beneficially enables faster processing of the computer workload by leveraging parallelization. In some examples, the sizes of each of the accelerator-specific data allocations are equal to within a size variance threshold. For instance, in one scenario, the workload may have a total size of 10MB. The workload may then be distributed between ten hardware accelerators as ten accelerator-specific data allocations having sizes of approximately 1MB. It will be understood that the sizes of the accelerator-specific data allocations need not be exactly equal, but rather may still vary by less than a size variance threshold. The size variance threshold may have any suitable value depending on the implementation. As one example, the size variance threshold is equal to 1KB. In general, the size variance threshold may have any suitable relationship with respect to the size of each accelerator-specific data allocation. For instance, the size variance threshold may be equal to 10% of the size of each accelerator-specific data allocation, or 5%, or 1%, or any other suitable value.

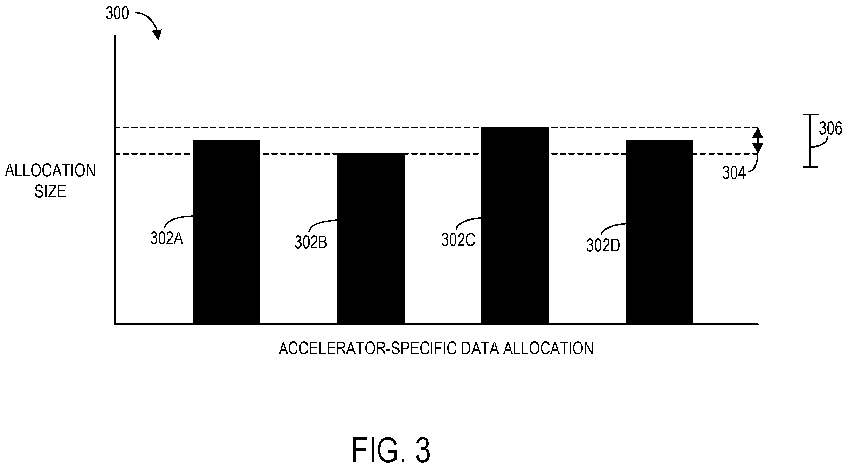

The sizes of different accelerator-specific data allocations are represented with respect to FIG. 3, showing a plot 300 depicting the sizes of different accelerator-specific data allocations 302A, 302B, 302C, and 302D. These may, for instance, correspond to accelerator-specific data allocations 106A-D of FIG. 1. As shown, the four accelerator-specific data allocations of FIG. 3 have sizes that differ by a size difference amount 304, which is less than a size variance threshold 306. This can beneficially improve the consistency of data processing by the hardware accelerators - e.g., making it relatively less likely that one hardware accelerator will finish processing its accelerator-specific data allocation significantly before other hardware accelerators. This beneficially reduces idle time of the hardware accelerators, which improves the processing capability of the hardware processing system.

Returning briefly to FIG. 2, at 204, method 200 includes, at a hardware accelerator of the plurality of hardware accelerators, after receiving an accelerator-specific data allocation from the load balancing controller, dividing a resulting dataset output by the hardware accelerator between a plurality of network interface controllers (NICs) of the hardware processing system as a plurality of NIC-specific data allocations. In other words, each hardware accelerator receives its accelerator-specific data allocation from the load balancing controller, and then generates output data as a result of processing the accelerator-specific data allocation. This resulting dataset is then divided between two or more NICs of the hardware processing system, representing another hierarchical layer at which the original computer workload is further divided between components of the hardware processing system.

This is schematically illustrated with respect to FIG. 1. As shown, the hardware processing system includes at least four NICs, including at least NICs 110A, 110B, 110C, and 110D. Each hardware accelerator, upon completing processing of its accelerator-specific data allocation, divides its resulting dataset between the plurality of NICs as a plurality of NIC-specific data allocations, including NIC-specific data allocations 112A, 112B, 112C, and 112D.

It will be understood that the number of NICs included in the hardware processing system is independent of the number of hardware accelerators. In other words, in FIG. 1, the number of hardware accelerators is equal to the number of NICs, although this need not be the case in other examples. In some examples, the number of NICs may be greater than the number of hardware accelerators. In one non-limiting example scenario, the hardware processing system includes four hardware accelerators and 32 NICs. In such a scenario, the computer workload is first divided between the four hardware accelerators, and then resulting data is divided between the 32 NICs.

In some examples, each hardware accelerator completes processing of its respective accelerator-specific data allocation at substantially the same time. In other words, each hardware accelerator of the plurality of hardware accelerators completes processing of its corresponding accelerator-specific data allocation within a processing completion time, and the processing completion times of the plurality of hardware accelerators differ by less than a time variance threshold. It will be understood that different processing contexts may be associated with different processing completion times, depending on the nature of the computer workload. In various examples, the processing completion time may be on the order of microseconds, milliseconds, single seconds, or any other suitable value. Similarly, the time variance threshold may have any suitable value with respect to the processing completion time. For instance, as with the size variance threshold, the time variance threshold may be equal to 10% of the processing completion time for each hardware accelerator, 5%, 1%, or any other suitable value.

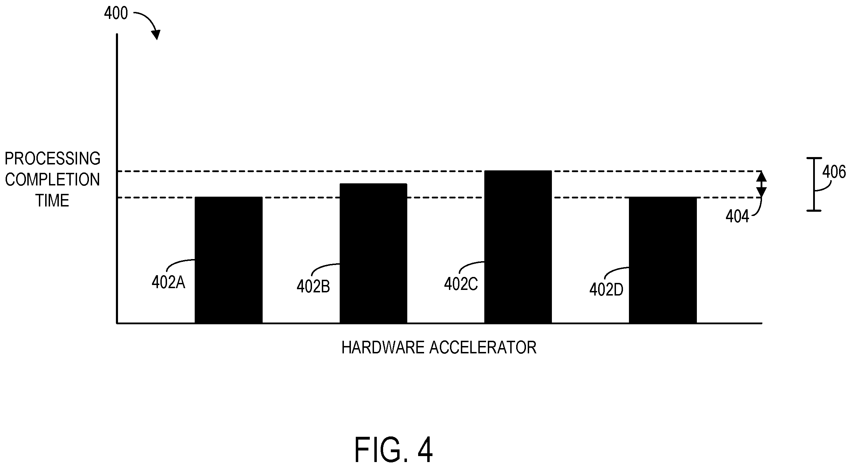

Similarity between processing completion times is illustrated with respect to FIG. 4, showing a plot 400 that depicts processing completion times of different hardware accelerators 402A, 402B, 402C, and 402D during processing of accelerator-specific data allocations. These may, for instance, correspond to hardware accelerators 106A-D of FIG. 1, processing accelerator-specific data allocations 108A-D. As shown in FIG. 4, the processing completion times differ by a time variance amount 404, which is less than a time variance threshold 406. This can beneficially improve the consistency of data processing by the hardware accelerators - e.g., making it relatively less likely that one hardware accelerator will finish processing its accelerator-specific data allocation significantly before other hardware accelerators. This beneficially reduces idle time of the hardware accelerators, which improves the processing capability of the hardware processing system.

In some examples, different accelerator-specific data allocations having similar sizes take different amounts of time to process, depending on the nature of the processing operations associated with fulfilling a given portion of the computer workload. As such, in some scenarios, the sizes of the accelerator-specific data allocations assigned to each hardware accelerator may be intentionally varied to attempt to achieve relatively equal processing completion times. In other words, for accelerators performing processing operations that take relatively more time, relatively smaller data allocations may be provided. Similarly, accelerators performing processing operations that take relatively less time may receive larger data allocations, such that each of the processing completion times of the hardware accelerators differ by less than the time variance threshold.

Notably, the data generated by a particular hardware accelerator may be divided between one or more of the different NICs. For instance, returning to FIG. 1, data generated by hardware accelerator 106A in processing accelerator-specific data allocation 108A may be included in any or all of the NIC-specific data allocations 112A, 112B, 112C, and 112D. In some examples, the plurality of NICs collectively comprise a virtual composite connection that is addressable by any of the plurality of hardware accelerators. This is the case in FIG. 1, where the plurality of NICs collectively comprise a virtual composite connection 113. In other words, from the perspective of the hardware accelerators, the individual NICs may be presented as a single aggregate communication channel over which the hardware accelerators can transmit data.

This virtual composite connection may beneficially allow for a seamless and efficient communication pathway by abstracting the complexity of multiple NICs into a unified interface. By aggregating the NICs into a single logical entity, the system can manage and optimize data traffic more effectively, ensuring that the workload is balanced across all available network resources. This aggregation simplifies the hardware accelerators' communication process, as they do not need to handle the intricacies of individual NICs and their respective configurations. Furthermore, the virtual composite connection may enhance the system's overall data throughput and reliability. It achieves this by distributing the data load evenly across multiple NICs, reducing the risk of bottlenecks that might occur if one NIC were to become overloaded. In the event of a failure or performance degradation in one of the NICs, the virtual composite connection can dynamically reroute data to the remaining functional NICs, maintaining continuous and reliable communication.

Returning briefly to FIG. 2, at 206, method 200 includes, at each NIC of the plurality of NICs, dividing an NIC-specific data allocation assigned to the NIC between a plurality of network ports of the NIC for transmission over a computer network. In other words, each NIC manages some number of corresponding network ports, over which data may be transmitted and/or received. By dividing each NIC-specific data allocation between two or more network ports, data associated with the original computer workload is divided at yet another hierarchical layer, which beneficially distributes the workload between the available components of the hardware processing system.

In FIG. 1, each NIC manages at least two network ports. For instance, NIC 110A manages network ports 114A and 114B, while other network ports 114C-H are managed by NICs 110B-D. It will be understood that each NIC may be associated with any suitable number of network ports depending on the implementation. For instance, in one non-limiting scenario, each NIC may divide its NIC-specific data allocation between four network ports.

In FIG. 1, each NIC divides its NIC-specific data allocation as two or more port-specific data allocations. For instance, network port 114A is assigned to transmit port-specific data allocation 116A, while port 114B transmits port-specific data allocation 116B, and so on for each of the ports 114A-H and each of the port-specific data allocations 116A-H. Each network port enables communication between the hardware processing system and a computer network 118, over which data associated with processing of the computer workload may be transmitted. For instance, as discussed above, the hardware processing system is in some cases an endpoint device of a distributed computing platform. In the example of FIG. 1, the hardware processing system is a component of a distributed ML inferencing platform 120, and communicates with other components of the platform via computer network 118. Thus, a plurality of different hardware processing systems may each handle the same or different computer workloads, and then transmit resulting data over the computer network to other devices within the computing platform - e.g., for storage, for further processing, for output to an end user (e.g., transmission to a client computing device), etc.

In some examples, the computer network includes a plurality of different network paths connecting the hardware processing system to other network devices within the computer network - such as routers, switches, other computing devices, etc. Thus, in some cases, each NIC further divides the data transmitted over the network ports between the various different network paths. This can further improve the consistency efficiency with which data is transmitted throughout the distributed computing platform, further improving the platform's overall efficiency.

Furthermore, the present disclosure primarily focuses on a scenario where the original computer workload is divided at three different hierarchical layers - e.g., first at the hardware accelerators, then at the NICs, and finally at the network ports. However, it will be understood that this is non-limiting. In other scenarios, only two hierarchical layers may be used, or more than three hierarchical layers may be used. Furthermore, any suitable number of components may be included within each hierarchical layer. In some examples, the techniques described herein may beneficially enable scaling of the hardware processing system to any suitable degree - e.g., by adding more components to each hierarchical layer, and/or adding more hierarchical layers. This can beneficially improve the performance of the hierarchical processing system as the size and/or complexity of the computer workload increases.

In some embodiments, the methods and processes described herein may be tied to a computing system of one or more computing devices. In particular, such methods and processes may be implemented as a computer-application program or service, an application-programming interface (API), a library, and/or other computer-program product.

FIG. 5 schematically shows a non-limiting embodiment of a computing system 500 that can enact one or more of the methods and processes described above. Computing system 500 is shown in simplified form. Computing system 500 may embody the computing system 1 described above and illustrated in FIG. 1. Components of computing system 500 may be included in one or more personal computers, server computers, tablet computers, home-entertainment computers, network computing devices, video game devices, mobile computing devices, mobile communication devices (e.g., smartphone), and/or other computing devices, and wearable computing devices such as smart wristwatches and head mounted augmented reality devices.

Computing system 500 includes a logic processor 502 volatile memory 504, and a non-volatile storage device 506. Computing system 500 may optionally include a display subsystem 508, input subsystem 510, communication subsystem 512, and/or other components not shown in FIG. 5.

Logic processor 502 includes one or more physical devices configured to execute instructions. For example, the logic processor may be configured to execute instructions that are part of one or more applications, programs, routines, libraries, objects, components, data structures, or other logical constructs. Such instructions may be implemented to perform a task, implement a data type, transform the state of one or more components, achieve a technical effect, or otherwise arrive at a desired result.

The logic processor may include one or more physical processors configured to execute software instructions. Additionally or alternatively, the logic processor may include one or more hardware logic circuits or firmware devices configured to execute hardware-implemented logic or firmware instructions. Processors of the logic processor 502 may be single-core or multi-core, and the instructions executed thereon may be configured for sequential, parallel, and/or distributed processing. Individual components of the logic processor optionally may be distributed among two or more separate devices, which may be remotely located and/or configured for coordinated processing. Aspects of the logic processor may be virtualized and executed by remotely accessible, networked computing devices configured in a cloud-computing configuration. In such a case, these virtualized aspects are run on different physical logic processors of various different machines, it will be understood.

Non-volatile storage device 506 includes one or more physical devices configured to hold instructions executable by the logic processors to implement the methods and processes described herein. When such methods and processes are implemented, the state of non-volatile storage device 506 may be transformed-e.g., to hold different data.

Non-volatile storage device 506 may include physical devices that are removable and/or built in. Non-volatile storage device 506 may include optical memory, semiconductor memory, and/or magnetic memory, or other mass storage device technology. Non-volatile storage device 506 may include nonvolatile, dynamic, static, read/write, read-only, sequential-access, location-addressable, file-addressable, and/or content-addressable devices. It will be appreciated that non-volatile storage device 506 is configured to hold instructions even when power is cut to the non-volatile storage device 506.

Volatile memory 504 may include physical devices that include random access memory. Volatile memory 504 is typically utilized by logic processor 502 to temporarily store information during processing of software instructions. It will be appreciated that volatile memory 504 typically does not continue to store instructions when power is cut to the volatile memory 504.

Aspects of logic processor 502, volatile memory 504, and non-volatile storage device 506 may be integrated together into one or more hardware-logic components. Such hardware-logic components may include field-programmable gate arrays (FPGAs), program- and application-specific integrated circuits (PASIC / ASICs), program- and application-specific standard products (PSSP / ASSPs), system-on-a-chip (SOC), and complex programmable logic devices (CPLDs), for example.

The terms "module," "program," and "engine" may be used to describe an aspect of computing system 500 typically implemented in software by a processor to perform a particular function using portions of volatile memory, which function involves transformative processing that specially configures the processor to perform the function. Thus, a module, program, or engine may be instantiated via logic processor 502 executing instructions held by non-volatile storage device 506, using portions of volatile memory 504. It will be understood that different modules, programs, and/or engines may be instantiated from the same application, service, code block, object, library, routine, API, function, etc. Likewise, the same module, program, and/or engine may be instantiated by different applications, services, code blocks, objects, routines, APIs, functions, etc. The terms "module," "program," and "engine" may encompass individual or groups of executable files, data files, libraries, drivers, scripts, database records, etc.

When included, display subsystem 508 may be used to present a visual representation of data held by non-volatile storage device 506. The visual representation may take the form of a graphical user interface (GUI). As the herein described methods and processes change the data held by the non-volatile storage device, and thus transform the state of the non-volatile storage device, the state of display subsystem 508 may likewise be transformed to visually represent changes in the underlying data. Display subsystem 508 may include one or more display devices utilizing virtually any type of technology. Such display devices may be combined with logic processor 502, volatile memory 504, and/or non-volatile storage device 506 in a shared enclosure, or such display devices may be peripheral display devices.

When included, input subsystem 510 may comprise or interface with one or more user-input devices such as a keyboard, mouse, touch screen, camera, or microphone.

When included, communication subsystem 512 may be configured to communicatively couple various computing devices described herein with each other, and with other devices. Communication subsystem 512 may include wired and/or wireless communication devices compatible with one or more different communication protocols. As non-limiting examples, the communication subsystem may be configured for communication via a wired or wireless local- or wide-area network, broadband cellular network, etc. In some embodiments, the communication subsystem may allow computing system 500 to send and/or receive messages to and/or from other devices via a network such as the Internet.

In an example, a method for computer workload allocation at a hardware processing system comprises: at a load balancing controller of the hardware processing system, dividing a computer workload for distributed processing between each of a plurality of hardware accelerators of the hardware processing system as a plurality of accelerator-specific data allocations; at a hardware accelerator of the plurality of hardware accelerators, after receiving an accelerator-specific data allocation from the load balancing controller, dividing a resulting dataset output by the hardware accelerator between a plurality of network interface controllers (NICs) of the hardware processing system as a plurality of NIC-specific data allocations; and at an NIC of the plurality of NICs, dividing an NIC-specific data allocation assigned to the NIC between a plurality of network ports of the NIC for transmission over a computer network. In this example or any other example, each of the plurality of accelerator-specific data allocations are processed concurrently by the plurality of hardware accelerators. In this example or any other example, each hardware accelerator of the plurality of hardware accelerators completes processing of its corresponding accelerator-specific data allocation within a processing completion time, and wherein a plurality of processing completion times of the plurality of hardware accelerators differ by less than a time variance threshold. In this example or any other example, sizes of each of the plurality of accelerator-specific data allocations are equal to within a size variance threshold. In this example or any other example, the plurality of NICs collectively comprise a virtual composite connection that is addressable by any of the plurality of hardware accelerators. In this example or any other example, the computer workload is a machine learning (ML) inferencing workload. In this example or any other example, the hardware processing system is a component of a distributed ML inferencing platform. In this example or any other example, the hardware processing system is a system-on-chip (SoC).

In an example, a hardware processing system comprises: a load balancing controller; a plurality of hardware accelerators; and a plurality of network interface controllers (NICs), wherein: the load balancing controller is configured to divide a computer workload for distributed processing between each of the plurality of hardware accelerators as a plurality of accelerator-specific data allocations; each hardware accelerator of the plurality of hardware accelerators is configured to, after receiving an accelerator-specific data allocation from the load balancing controller, divide a resulting dataset output by the hardware accelerator between the plurality of NICs of the hardware processing system as a plurality of NIC-specific data allocations; and each NIC of the plurality of NICs is configured to divide an NIC-specific data allocation assigned to the NIC between a plurality of network ports of the NIC for transmission over a computer network. In this example or any other example, each of the plurality of accelerator-specific data allocations are processed concurrently by the plurality of hardware accelerators. In this example or any other example, each hardware accelerator of the plurality of hardware accelerators completes processing of its corresponding accelerator-specific data allocation within a processing completion time, and wherein a plurality of processing completion times of the plurality of hardware accelerators differ by less than a time variance threshold. In this example or any other example, sizes of each of the accelerator-specific data allocations are equal to within a size variance threshold. In this example or any other example, the plurality of NICs collectively comprise a virtual composite connection that is addressable by any of the plurality of hardware accelerators. In this example or any other example, the computer workload is a machine learning (ML) inferencing workload. In this example or any other example, the hardware processing system is a component of a distributed ML inferencing platform.

In an example, a method for computer workload allocation at a system-on-chip (SoC) comprises: at a load balancing controller of the SoC, dividing a machine learning (ML) inferencing workload for distributed processing between each of a plurality of hardware accelerators of the SoC as a plurality of accelerator-specific data allocations, wherein sizes of each of the plurality of accelerator-specific data locations are equal to within a size variance threshold; at a hardware accelerator of the plurality of hardware accelerators, after receiving an accelerator-specific data allocation from the load balancing controller, dividing a resulting dataset output by the hardware accelerator between a plurality of network interface controllers (NICs) of the SoC as a plurality of NIC-specific data allocations; and at an NIC of the plurality of NICs, dividing an NIC-specific data allocation assigned to the NIC between a plurality of network ports of the NIC for transmission over a computer network. In this example or any other example, each of the plurality of accelerator-specific data allocations are processed concurrently by the plurality of hardware accelerators. In this example or any other example, each hardware accelerator of the plurality of hardware accelerators completes processing of its corresponding accelerator-specific data allocation within a processing completion time, and wherein a plurality of processing completion times of the plurality of hardware accelerators differ by less than a time variance threshold. In this example or any other example, the plurality of NICs collectively comprise a virtual composite connection that is addressable by any of the plurality of hardware accelerators. In this example or any other example, the hardware processing system is a component of a distributed ML inferencing platform.

In an example, a method for computer workload allocation at a system-on-chip (SoC) includes, at a load balancing controller of the SoC, dividing a computer workload for distributed processing between each of a plurality of hardware accelerators of the SoC as a plurality of accelerator-specific data allocations. At a hardware accelerator of the plurality of hardware accelerators, after receiving an accelerator-specific data allocation from the load balancing controller, a resulting dataset output by the hardware accelerator is divided between a plurality of network interface controllers (NICs) of the SoC as a plurality of NIC-specific data allocations. At an NIC of the plurality of NICs an NIC-specific data allocation assigned to the NIC is divided between a plurality of network ports of the NIC for transmission over a computer network.

"And/or" as used herein is defined as the inclusive or ∨, as specified by the following truth table:

| A | B | A ∨ B |
|---|---|---|
| True | True | True |
| True | False | True |
| False | True | True |
| False | False | False |

It will be understood that the configurations and/or approaches described herein are exemplary in nature, and that these specific embodiments or examples are not to be considered in a limiting sense, because numerous variations are possible. The specific routines or methods described herein may represent one or more of any number of processing strategies. As such, various acts illustrated and/or described may be performed in the sequence illustrated and/or described, in other sequences, in parallel, or omitted. Likewise, the order of the above-described processes may be changed.

The subject matter of the present disclosure includes all novel and non-obvious combinations and sub-combinations of the various processes, systems and configurations, and other features, functions, acts, and/or properties disclosed herein, as well as any and all equivalents thereof.

## Claims

1. A method (200) for computer workload allocation at a hardware processing system (100), the method (200) comprising:
at a load balancing controller (102) of the hardware processing system (100), dividing (202) a computer workload (104) for distributed processing between each of a plurality of hardware accelerators (106) of the hardware processing system (100) as a plurality of accelerator-specific data allocations (108);
at a hardware accelerator (106A) of the plurality of hardware accelerators (106), after receiving an accelerator-specific data allocation (108A) from the load balancing controller (102), dividing a resulting dataset output by the hardware accelerator (106A) between a plurality of network interface controllers, NICs, (110) of the hardware processing system (110) as a plurality of NIC-specific data allocations (112); and
at an NIC (110A) of the plurality of NICs (110), dividing an NIC-specific data allocation assigned to the NIC (110A) between a plurality of network ports (114) of the NIC (110A) for transmission over a computer network (118).

2. The method of claim 1, wherein each of the plurality of accelerator-specific data allocations are processed concurrently by the plurality of hardware accelerators.

3. The method of claim 1 or claim 2, wherein each hardware accelerator of the plurality of hardware accelerators completes processing of its corresponding accelerator-specific data allocation within a processing completion time, and wherein a plurality of processing completion times of the plurality of hardware accelerators differ by less than a time variance threshold.

4. The method of any of claim 1 to claim 3, wherein sizes of each of the plurality of accelerator-specific data allocations are equal to within a size variance threshold.

5. The method of claim 1, wherein the plurality of NICs collectively comprise a virtual composite connection that is addressable by any of the plurality of hardware accelerators.

6. The method of claim 1, wherein the computer workload is a machine learning, ML, inferencing workload.

7. The method of claim 6, wherein the hardware processing system is a component of a distributed ML inferencing platform.

8. The method of claim 1, wherein the hardware processing system is a system-on-chip, SoC.

9. A hardware processing system (100), comprising:
a load balancing controller (102);
a plurality of hardware accelerators (106); and
a plurality of network interface controllers, NICs, (110), wherein:
the load balancing controller (102) is configured to divide a computer workload (104) for distributed processing between each of the plurality of hardware accelerators (106) as a plurality of accelerator-specific data allocations (108);
each hardware accelerator of the plurality of hardware accelerators (106) is configured to, after receiving an accelerator-specific data allocation (108) from the load balancing controller (102), divide a resulting dataset output by the hardware accelerator (106) between the plurality of NICs (110) of the hardware processing system (100) as a plurality of NIC-specific data allocations (112); and
each NIC of the plurality of NICs (110) is configured to divide an NIC-specific data allocation (112) assigned to the NIC between a plurality of network ports (114) of the NIC for transmission over a computer network (118).

10. The hardware processing system of claim 9, wherein each of the plurality of accelerator-specific data allocations are processed concurrently by the plurality of hardware accelerators.

11. The hardware processing system of claim 9 or claim 10, wherein each hardware accelerator of the plurality of hardware accelerators completes processing of its corresponding accelerator-specific data allocation within a processing completion time, and wherein a plurality of processing completion times of the plurality of hardware accelerators differ by less than a time variance threshold.

12. The hardware processing system of any of claim 9 to claim 11, wherein sizes of each of the accelerator-specific data allocations are equal to within a size variance threshold.

13. The hardware processing system of claim 9, wherein the plurality of NICs collectively comprise a virtual composite connection that is addressable by any of the plurality of hardware accelerators.

14. The hardware processing system of claim 9, wherein the computer workload is a machine learning, ML, inferencing workload.

15. The hardware processing system of claim 14, wherein the hardware processing system is a component of a distributed ML inferencing platform.
